(19)

Europäisches
Patentamt
European
Patent Office
Office européen
des brevets

(11) **EP 4 123 594 A2**

(12) **EUROPEAN PATENT APPLICATION**

(43) Date of publication:
 **25.01.2023   Bulletin 2023/04**

(51) International Patent Classification (IPC):
 **G06V 10/82** *(2022.01)*

(21) Application number: **22200204.0**

(22) Date of filing: **07.10.2022**

(52) Cooperative Patent Classification (CPC):
 **G06V 10/82; G06V 10/255**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **KH MA MD TN**

(30) Priority: **29.10.2021   CN 202111271219**

(71) Applicant: **Beijing Baidu Netcom
 Science Technology Co., Ltd.
 Beijing 100085 (CN)**

(72) Inventors:
 • **WANG, Yunhao
  Beijing 100085 (CN)**
 • **ZHANG, Bin
  Beijing 100085 (CN)**

 • **LI, Chao
  Beijing 100085 (CN)**
 • **PENG, Yan
  Beijing 100085 (CN)**
 • **CHEN, Song
  Beijing 100085 (CN)**
 • **XUE, Song
  Beijing 100085 (CN)**
 • **FENG, Yuan
  Beijing 100085 (CN)**
 • **HAN, Shumin
  Beijing 100085 (CN)**

(74) Representative: **von Tietzen und Hennig, Nikolaus
 Lorenz Seidler Gossel
 Rechtsanwälte Patentanwälte
 Partnerschaft mbB
 Widenmayerstraße 23
 80538 München (DE)**

(54)  **OBJECT DETECTION METHOD AND APPARATUS, COMPUTER-READABLE STORAGE
 MEDIUM, AND COMPUTER PROGRAM PRODUCT**

(57)   A method includes: segmenting an image to be detected into a plurality of image blocks; generating a feature representation of the image to be detected based on the plurality of image blocks; mapping the feature representation by using a preset parameter set to obtain a plurality of feature maps of the image to be detected; and determining a position and a class of a target object in the image to be detected based on the plurality of feature maps.

<u>**100**</u>

Fig. 1

EP 4 123 594 A2

**Description**

TECHNICAL FIELD

The present disclosure relates to the technical field of artificial intelligence, in particular to computer vision and deep learning technologies, and specifically to an object detection method and apparatus, a computer-readable storage medium, and a computer program product.

BACKGROUND

Artificial intelligence is a subject on making a computer simulate some thinking processes and intelligent behaviors (such as learning, reasoning, thinking, and planning) of a human, and involves both hardware-level technologies and software-level technologies. Artificial intelligence hardware technologies generally include technologies such as sensors, dedicated artificial intelligence chips, cloud computing, distributed storage, and big data processing. Artificial intelligence software technologies mainly include the following several general directions: computer vision technologies, speech recognition technologies, natural language processing technologies, machine learning/deep learning, big data processing technologies, and knowledge graph technologies.

Object detection is an image processing task in the field of artificial intelligence, which means detecting a target object existing in an image, calibrating a position of the target object in the image, and determining a class to which the target object belongs. The object detection is usually implemented by using deep learning technologies. That is, a deep learning model is trained based on a sample image, and then a trained model is used to implement the object detection on an image to be detected.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

SUMMARY

The present disclosure provides an object detection method and apparatus, a computer-readable storage medium, and a computer program product.

According to an aspect of the present disclosure, there is provided a computer-implemented object detection method, including: segmenting an image to be detected into a plurality of image blocks; generating a feature representation of the image to be detected based on the plurality of image blocks; mapping the feature representation by using a preset parameter set to obtain a plurality of feature maps of the image to be detected; and determining a position and a class of a target object in the image to be detected based on the plurality of feature maps.

According to an aspect of the present disclosure, there is provided an object detection apparatus, including: a segmenting module configured to segment an image to be detected into a plurality of image blocks; a generating module configured to generate a feature representation of the image to be detected based on the plurality of image blocks; a mapping module configured to map the feature representation by using a preset parameter set to obtain a plurality of feature maps of the image to be detected; and a determining module configured to determine a position and a class of a target object in the image to be detected based on the plurality of feature maps.

According to an aspect of the present disclosure, there is provided a non-transitory computer-readable storage medium storing computer instructions, where the computer instructions are configured to enable a computer to implement the method according to any one of the aspects described above.

According to an aspect of the present disclosure, there is provided a computer program product, including a computer program, where the computer program, when executed by a processor, implements the method according to any one of the aspects described above.

According to one or more embodiments of the present disclosure, accurate object detection can be implemented.

The object detection model is obtained by training the first sample image and the second sample image, and the first sample image and the second sample image include the target object belonging to the target class. In a training process of the object detection model, a feature of the first sample image (i.e., the first feature) is extracted based on the second sample image, so that the second sample image can guide and enhance feature learning of the object detection model about the first sample image, to improve an object detection effect of the object detection model on the first sample image. Although the number of sample images of the target class is small, a trained object detection model can still implement accurate detection on the target object.

It should be understood that the content described in this section is not intended to identify critical or important features of the embodiments of the present disclosure, and is not used to limit the scope of the present disclosure. Other features of the present disclosure will be easily understood through the following description.

BRIEF DESCRIPTION OF THE DRAWINGS

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.

FIG. 1 is a flowchart of an object detection method according to an embodiment of the present disclosure;
FIG. 2 is a structural diagram of an object detection model according to an embodiment of the present disclosure;
FIG. 3 is a flowchart of a method for training an object detection model according to an embodiment of the present disclosure;
FIGs. 4A and 4B are schematic diagrams of a first image and a second image according to an embodiment of the present disclosure;
FIG. 5 is a schematic diagram of a sample image set and a local image set according to an embodiment of the present disclosure;
FIG. 6 is a structural diagram of an object detection model according to an embodiment of the present disclosure;
FIG. 7 is a structural diagram of a feature extraction network shown in FIG. 6;
FIG. 8 is a structural block diagram of an object detection apparatus according to an embodiment of the present disclosure;
FIG. 9 is a structural block diagram of an apparatus for training an object detection model according to an embodiment of the present disclosure; and
FIG. 10 is a structural block diagram of an exemplary electronic device that can be used to implement an embodiment of the present disclosure.

DETAILED DESCRIPTION OF EMBODIMENTS

Exemplary embodiments of the present disclosure are described below with reference to the accompanying drawings, where various details of the embodiments of the present disclosure are included for a better understanding, and should be considered as merely exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

In the present disclosure, collecting, storage, use, processing, transmitting, providing, disclosing, etc. of personal information of a user involved all comply with related laws and regulations and are not against the public order and good morals.

Object detection is an image processing task in the field of artificial intelligence, which means detecting a target object existing in an image, calibrating a position of the target object in the image, and determining a class to which the target object belongs. The object detection is usually implemented by using deep learning technologies. That is, a deep learning model is trained based on a sample image, and then a trained model is used to implement the object detection on an image to be detected.

In order to implement accurate object detection, a large number of sample images need to be used to train the model. However, acquisition and annotation of the large number of sample images are usually time-consuming and labor-intensive. Therefore, it is desirable to provide a method that enables the model to achieve a good detection effect even when the number of sample images is small (i.e., "few-shot").

In the related art, for a few-shot model training task, an original sample image is usually processed (e.g., rotation, translation, brightness adjustment, and noise addition) to obtain a new sample image, as so to expand a sample image set. However, a newly added sample image only shows a large change in human vision. For a deep learning network having displacement/scale/deformation invariance, a training effect of an expanded sample image set is similar to that of an original sample image set, the accuracy of object detection is still poor, and it is difficult to meet the requirements of a user.

Therefore, the embodiments of the present disclosure provide an object detection method and a method for training an object detection model, which can implement accurate object detection in a few-shot case.

The embodiments of the present disclosure will be described below in detail with reference to the accompanying drawings.

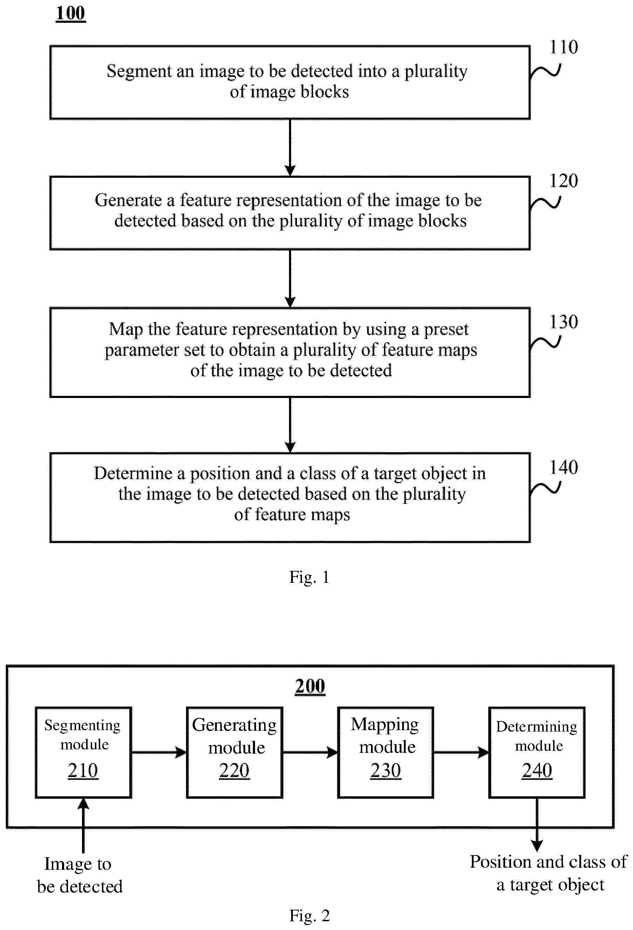

FIG. 1 is a flowchart of an object detection method 100 according to an embodiment of the present disclosure. The method 100 may be performed, for example, at a client device or at a server. That is, an execution body of each step of the method 100 may be the client device or the server.

As shown in FIG. 1, the method 100 includes:

step 110: segmenting an image to be detected into a plurality of image blocks;
step 120: generating a feature representation of the image to be detected based on the plurality of image blocks;
step 130: mapping the feature representation by using a preset parameter set to obtain a plurality of feature maps of the image to be detected; and
step 140: determining a position and a class of a target object in the image to be detected based on the plurality of feature maps.

According to an embodiment of the present disclosure, accurate object detection can be implemented.

Each step of the method 100 is described in detail below.

In step 110, the image to be detected is segmented into the plurality of image blocks.

According to some embodiments, the image to be detected may be segmented into the plurality of image blocks that are of the same size and do not overlap with each other. For example, the size of the image to be detected is 224*224 (pixels), and size of an image block may be set to 4*4. Then, the image to be detected may be segmented into (224/4)*(224/4) = 3136 image blocks.

In step 120, the feature representation of the image to be detected is generated based on the plurality of image blocks obtained in step 110.

According to some embodiments, step 120 may further include: for each image block of the plurality of image blocks: determining a first vector representation of the image block based on pixel values of the image block; transforming the first vector representation by using a preset transformation matrix to generate a second vector representation of the image block; and combining the second vector representation of each image block of the plurality of image blocks to obtain the feature representation of the image to be detected.

According to some embodiments, the first vector representation of the image block is a concatenation of pixel values of each channel of the image block. For example, the size of the image block is 4*4, and the image block includes three channels: R, G, and B. Then, each pixel value of the three channels R, G, and B of the image block may be concatenated together to obtain the first vector representation of the image block. The first vector representation is a vector with a length of 4*4*3 = 48, specifically may be a 1*48 row vector, or may be a 48*1 column vector.

After the first vector representation of the image block is obtained, the preset transformation matrix may be used to map the first vector representation to obtain the second vector representation of the image block. For example, the first vector representation is a 1*48 row vector, and a 1*96 second vector representation may be obtained through right multiplying of the row vector by a 48*96 transformation matrix. A value of each element in the transformation matrix may be preset by those skilled in the art.

By combining the second vector representation of each image block, the feature representation of the image to be detected may be obtained. For example, the image to be detected with the size of 224*224 is divided into 56*56 4*4 image blocks, the second vector representation of each image block is a 1*96 vector, and the second vector representation of each image block is combined to obtain the feature representation of the image to be detected, which may be 96 56*56 feature maps.

Based on steps 110 and 120, downsampling of the image to be detected may be implemented to improve object detection efficiency of the image to be detected.

In step 130, the preset parameter set is used to map the feature representation of the image to be detected, so as to obtain the plurality of feature maps of the image to be detected.

According to some embodiments, the preset parameter set may include at least one matrix and/or at least one function. By using these matrices and/or functions to perform calculation operations on the feature representation of the image to be detected, the plurality of feature maps of the image to be detected may be obtained.

In step 140, the position and the class of the target object in the image to be detected are determined based on the plurality of feature maps.

According to some embodiments, a correspondence between the feature maps and the position and the class of the target object may be preset to obtain a correspondence table of the three. Then, based on the plurality of feature maps of the image to be detected, the position and the class of the target object in the image to be detected are determined by querying the table.

According to other embodiments, the position and the class of the target object in the image to be detected may also be determined based on a set of preset parameters. A set of preset parameters may include at least one matrix and/or at least one function. By using these matrices and/or functions to perform calculation operations on the plurality of feature maps of the image to be detected, the position and the class of the target object in the image to be detected may be determined.

According to some embodiments, the method 100 may be implemented by an object detection model, and each step of the method 100 corresponds to a processing module in the object detection model. By inputting the image to be detected to the object detection model, the position and the class of the target object in the image to be detected that are output by the object detection model may be obtained.

The object detection model may be obtained by training before the method 100 is performed. According to some embodiments, the object detection model may be obtained through the following method for training an object detection model.

FIG. 2 is a structural diagram of an object detection model 200 according to an embodiment of the present disclosure. As shown in FIG. 2, the object detection model 200 includes a segmenting module 210, a generating module 220, a mapping module 230, and a determining module 240. Modules 210 to 240 are respectively used to perform steps 110 to 140 of the method 100. The mapping module 230 may be, for example, a transformer model, and the determining module 240 may be, for example, a region proposal network (RPN).

According to an embodiment of the present disclosure, there is further provided a method for training an object detection model, and accurate object detection in a few-shot case can be implemented based on the method.

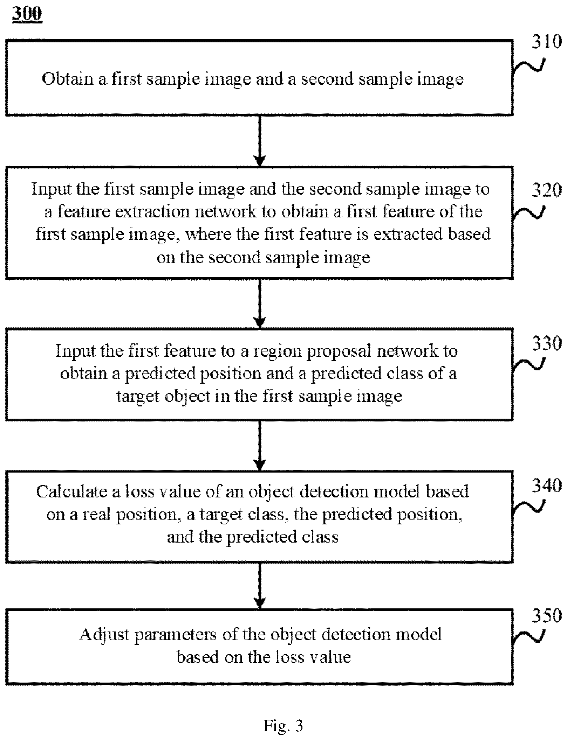

FIG. 3 is a flowchart of a method 300 for training an object detection model according to an embodiment of the present disclosure, where the object detection model includes a feature extraction network and a region proposal network. The method 300 may be performed, for example, at a server or at a client device. That is, an execution body of each step of the method 300 may be the server or the client device.

As shown in FIG. 3, the method 300 includes:

step 310: obtaining a first sample image and a second sample image, where the first sample image and the second sample image include a target object belonging to a target class, and the first sample image is annotated with a real position and the target class of the target object;

step 320: inputting the first sample image and the second sample image to the feature extraction network to obtain a first feature of the first sample image, where the first feature is extracted based on the second sample image;

step 330: inputting the first feature to the region proposal network to obtain a predicted position and a predicted class of the target object in the first sample image;

step 340: calculating a loss value of the object detection model based on the real position, the target class, the predicted position, and the predicted class; and

step 350: adjusting parameters of the object detection model based on the loss value.

According to this embodiment of the present disclosure, the object detection model is obtained by training the first sample image and the second sample image, and the first sample image and the second sample image include the target object belonging to the target class. In a training process of the object detection model, a feature of the first sample image (i.e., the first feature) is extracted based on the second sample image, so that the second sample image can guide and enhance feature learning of the object detection model about the first sample image, to improve an object detection effect of the object detection model on the first sample image. Although the number of sample images of the target class is small, a trained object detection model can still implement accurate detection on the target object.

According to some embodiments, the object detection model may be pre-trained model. That is, before step 310 is performed, the object detection model may be pre-trained based on image data of a basic class, where the basic class is different from the target class. Moreover, there may be a plurality of basic classes. Thus, pre-training of the object detection model may be completed based on image data of a large number of basic classes. Then based on steps 310 to 350, the pre-trained object detection model is fine-tuned, so that the object detection model can further detect the target object of the target class, training efficiency of the training process shown in steps 310 to 350 is improved, and the object detection model has good generalization performance.

In step 310, the first sample image and the second sample image are obtained. Both the first sample image and the second sample image include the target object belonging to the target class, and the first sample image is annotated with the real position and the target class of the target object.

It should be noted that in various embodiments of the method 300, the target object is generally an object belonging to the target class. The target object in the first sample image and the target object in the second sample image may be the same or different.

In addition, it should be noted that the first sample image and the second sample image may also include another type of object other than the target object.

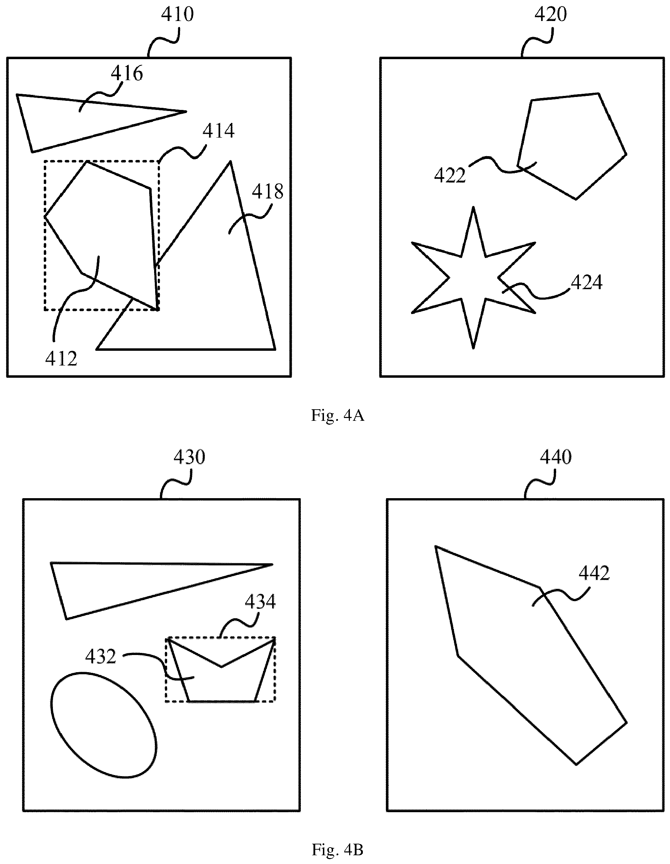

FIG. 4A is a schematic diagram of a first sample image 410 and a second sample image 420 according to an embodiment of the present disclosure. The target class may be, for example, a "pentagon", and accordingly, any object in a shape of a pentagon is the target object. As shown in FIG. 4A, the first sample image 410 includes a target object 412, the second sample image 420 includes a target object 422, and the first sample image 410 is annotated with the target class "pentagon" (not shown in FIG. 4A) and a real position of the target object 412, that is a bounding rectangular frame 414 of the target object 412. The first sample image 410 includes, in addition to the target object 412, two triangular objects 416 and 418 (i.e., a class "triangle"). The second sample image 420 includes, in addition to the target object 422, an object 424 in a shape of a six-pointed star (i.e., a class "six-pointed star").

According to some embodiments, the second sample image includes and only includes the target object, and does not include an object of another class, so that the object detection model can be guided to learn a feature of the target object in a more targeted manner, and the accuracy of detection on the target object by the model is improved.

For example, FIG. 4B is a schematic diagram of a first sample image 430 and a second sample image 440 according to another embodiment of the present disclosure. The target class may be, for example, a "pentagon", and accordingly, any object in a shape of a pentagon is the target object. As shown in FIG. 4B, the first sample image 430 includes a target object 432 and two objects of other classes, and is annotated with the target class "pentagon" (not shown in FIG. 4B) and a real position of the target object 432, that is, a bounding rectangular frame 434 of the target object 432. The second sample image 440 includes and only includes a target object 442, which can guide the object detection model to learn a feature of the target object in a more targeted manner, and the accuracy of detection on the target object by the model is improved.

According to some embodiments, the first sample image and the second sample image may be obtained based on the following steps: obtaining a plurality of sample images of the target class, where each sample image includes at least the target object; and obtaining a plurality of local images by clipping a local region including the target object from each sample image of the plurality of sample images, where the first sample image is any one of the plurality of sample images, and the second sample image is any one of the plurality of local images.

It should be noted that in the above embodiment, the sample image may be clipped along the bounding rectangular frame of the target object, so that a local image obtained by clipping includes and only includes the target object, to improve a learning effect on the feature of the target object by the object detection model.

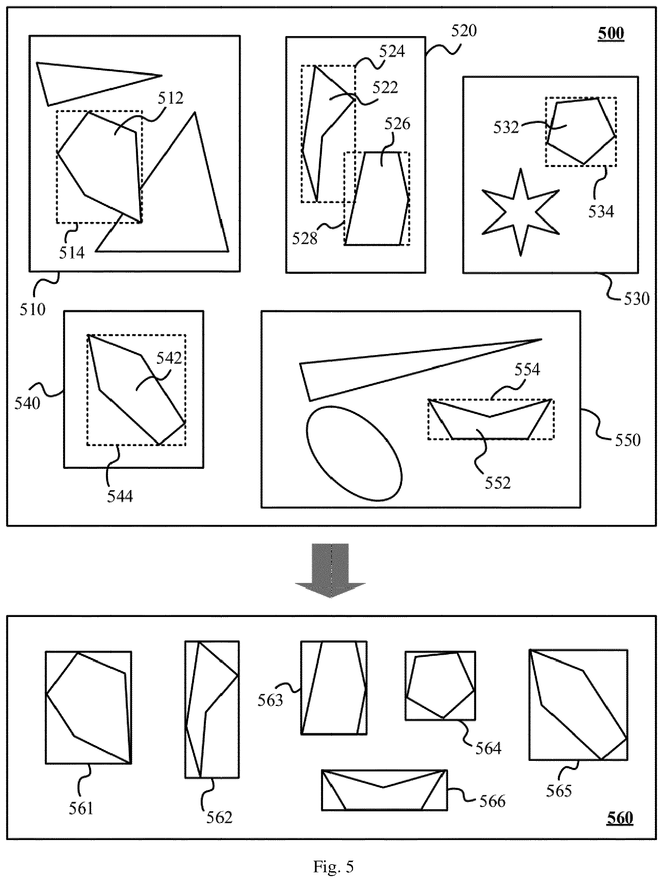

FIG. 5 is a schematic diagram of a sample image set and a local image set according to an embodiment of the present disclosure. In the embodiment shown in FIG. 5, a target class is a "pentagon". Five sample images of the target class, that is, sample images 510 to 550, constitute a sample image set 500. A local region 514 including a target object 512 is obtained by clipping a sample image 510, to obtain a local image 561. A local region 524 including a target object 522 and a local region 528 including a target object 526 are obtained by clipping a sample image 520, to obtain a local image 562 and a local image 563. A local region 534 including a target object 532 is obtained by clipping a sample image 530, to obtain a local image 564. A local region 544 including a target object 542 is obtained by clipping a sample image 540, to obtain a local image 565. A local region 554 including a target object 552 is obtained by clipping a sample image 550, to obtain a local image 566. The local images 561 to 566 constitute a local image set 560. Any sample image in the sample image set 500 may be used as a first sample image, and any local image in the local image set 560 may be used as a second sample image. Based on the sample image set 500 and the local image set 560 shown in FIG. 5, 5*6 = 30 (first sample image, second sample image) image pairs may be obtained.

According to other embodiments, a plurality of sample images of the target class may be directly sampled to obtain the first sample image and the second sample image. That is, the first sample image and the second sample image may each be any one of the plurality of sample images of the target class. Still taking FIG. 5 as an example, any sample image in the sample image set 500 may be used as a first sample image, and any sample image in the sample image set 500 may be used as a second sample image. Based on the sample image set shown in FIG. 5, 5*5 = 25 (first sample image, second sample image) image pairs may be obtained.

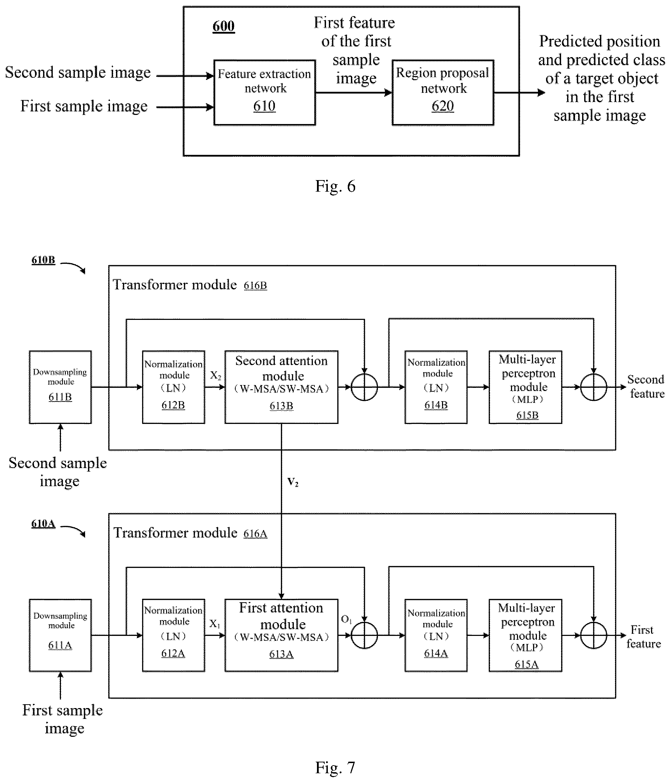

FIG. 6 is a structural diagram of an object detection model 600 according to an embodiment of the present disclosure. As shown in FIG. 6, the object detection model 600 includes a feature extraction network 610 and a region proposal network 620. The feature extraction network 610 may include, for example, one or more transformer modules, and the region proposal network 620 may be implemented as a network structure such as an RPN and a Faster R-CNN.

In step 320, the first sample image and the second sample image are input to the feature extraction network 610. The feature extraction network 610 implements feature extraction on the first sample image based on the second sample image, to obtain the first feature of the first sample image.

In step 330, the first feature of the first sample image is input to the region proposal network 620. The region proposal network 620 processes the first feature to obtain and output the predicted position and the predicted class of the target object in the first sample image.

According to some embodiments, the feature extraction network includes a first extraction branch for extracting the first feature of the first sample image and a second extraction branch for extracting a second feature of the second sample image, where the first extraction branch includes at least one first attention module, the second extraction branch includes at least one second attention module, the at least one first attention module and the at least one second attention module are in a one-to-one correspondence, and each first attention module shares parameters with a second attention module corresponding to the first attention module. According to some embodiments, a structure of the first extraction branch and a structure of the second extraction branch may be identical and share parameters.

According to some embodiments, the first attention module and the second attention module may be a Self-Attention module. Parameters of the Self-Attention module include a first transformation matrix $W^Q$, a second transformation matrix $W^K$, and a third transformation matrix $W^V$. A data processing process performed by the Self-Attention module is as follows:

First, input data X is obtained, and the first transformation matrix $W^Q$, the second transformation matrix $W^K$, and the third transformation matrix $W^V$ are respectively used to perform linear transformation on X to obtain a query matrix Query (Q for short, Q = X·$W^Q$), a key matrix Key (K for short, K = X·$W^K$), and a value matrix Value (V for short, V = X·$W^V$).

Then, output data is obtained according to the following formula:

$$Attention\ (Q, K, V) = softmax\ (\frac{QK^T}{\sqrt{d_k}})\ V \qquad\qquad (1)$$

In formula (1), Attention (Q, K, V) is the output of the Self-Attention module, and dk is a row number or a column number of the matrix K.

In an embodiment of the present disclosure, each second attention module of the at least one second attention module is configured to: process second input data input to the second attention module, and output a value matrix (V2) of the second input data.

Each first attention module of the at least one first attention module is configured to: obtain a value matrix ($V_2$) output by a second attention module corresponding to the first attention module; process first input data input to the first attention module to obtain a query matrix ($Q_1$) and a key matrix ($K_1$) of the first input data; and determine and output the first output data of the first attention module based on the query matrix ($Q_1$), the key matrix ($K_1$), and the value matrix ($V_2$).

The following describes the data processing process of the first attention module and the second attention module with reference to FIG. 7.

FIG. 7 is an exemplary structural diagram of the feature extraction network 610 shown in FIG. 6. As shown in FIG. 7, the feature extraction network includes a first extraction branch 610A and a second extraction branch 610B. The first extraction branch 610A is used to extract the first feature of the first sample image, and the second extraction branch 610B is used to extract a second feature of the second sample image.

Structures of the first extraction branch 610A and the second extraction branch 610B are the same, and each include a downsampling module (611A/611B) and a transformer module (616A/616B). The transformer module (616A/616B) further includes a normalization module (612A/612B), an attention module (613A/613B), a normalization module (614A/614B), and a multi-layer perceptron module (615A/615B).

The first extraction branch 610A and the second extraction branch 610B share parameters. That is, parameter values of the downsampling module 611A and parameter values of the downsampling module 611B are the same, and parameter values of the transformer module 616A and parameter values of the transformer module 616B are the same. Further, parameter values of the normalization module 612A and parameter values of the normalization module 612B are the same, parameter values of the first attention module 613A and parameter values of the second attention module 613B are the same, and so on.

The downsampling modules 611A and 611B are respectively used to segment the first sample image and the second sample image into a plurality of image blocks, and process the plurality of image blocks (e.g., perform processing of step 120, that is, to determine a first vector representation of each image block, perform linear transformation on the first vector representation to obtain a second vector representation, and combine the vector representations of the image block) to generate a feature representation of the first sample image and a feature representation of the second sample image.

The normalization modules 612A, 612B, 614A, and 614B may be, for example, layer normalization (LN) processing layers.

The first attention module 613A and the second attention module 613B may be, for example, a Window Multi-head Self-Attention (W-MSA) module and a Shifted-Window Multi-head Self-Attention (SW-MSA) module.

In the embodiment shown in FIG. 7, the first attention module 613A and the second attention module 613B have the same transformation matrices $W^Q$, $W^K$, and $W^V$.

The second attention module 613B uses the transformation matrix $W^V$ to transform the second input data $X_2$ to obtain the value matrix $V_2$ ($V_2 = X_2 \cdot W^V$), and outputs the value matrix $V_2$ to the first attention module 613A.

The first attention module 613A obtains the value matrix V2. Moreover, first input data $X_1$ is transformed by the transformation matrix to obtain the query matrix $Q_1$ ($Q_1 = X_1 \cdot W^Q$) and the key matrix $K_1$ ($K_1 = X_1 \cdot W^K$), and then first output data $O_1$ is calculated according to the following formula (2):

$$O_1 = softmax \ (\frac{Q_1 K_1^T}{\sqrt{d_{k_1}}}) \ V_2 \qquad\qquad (2)$$

In formula (2), $d_{k1}$ is a row number or a column number of the matrix $K_1$.

In the embodiment of the present disclosure, by replacing the value matrix of the first attention module 613A with the value matrix V2 calculated by the second attention module 613B, the feature of the second sample image may be introduced into the first sample image, to enhance the learning effect of the feature of the first sample image.

The multi-layer perceptron modules 615A and 615B may be, for example, a Multi-Layer Perceptron (MLP) composed of a plurality of fully connected layers.

It should be noted that the structure of the feature extraction network shown in FIG. 7 is merely an example. In practice, the feature extraction network may also use other structures, for example, the feature extraction network may include a plurality of downsampling modules and transformer modules that are connected in sequence. The present disclosure does not limit the specific structure of the feature extraction network.

Still referring to FIG. 3, after the predicted position and the predicted class of the target object in the first sample image are obtained through step 330, step 340 may be performed to calculate the loss value of the object detection model based on the real position, the target class, the predicted position, and the predicted class of the target object in the first sample image. It should be noted that the present disclosure does not limit a calculation formula (i.e., the loss function) of the loss value. In some embodiments, the loss function may be set to a sum of a cross-entropy loss of the target class and the predicted class and an overlap loss (GIoU) of the real position and the predicted position.

In step 350, the parameters of the object detection model may be adjusted by, e.g., a back propagation algorithm.

Steps 310 to 350 may be performed in a loop a plurality of times until the loss value of the object detection model is less than a preset threshold, and the training of the object detection model is completed.

According to some embodiments, in response to determining that the loss value of the object detection model is less than the preset threshold, the second extraction branch in the feature extraction network is deleted. That is, after the training of the object detection model is completed, the second extraction branch is deleted. The second extraction branch only plays a role in a training phase of the object detection model and has no effect on an application phase of the object detection model. By deleting the second extraction branch, a model structure may be simplified, so as to reduce a storage space occupied by the object detection model.

The object detection model trained by the method 300 may be used for objects belonging to the target class in the image to be detected. Specifically, the image to be detected may be input to the object detection model (specifically, input to the first extraction branch of the object detection model), and the object detection model may output the position and the class of the target object in the image to be detected.

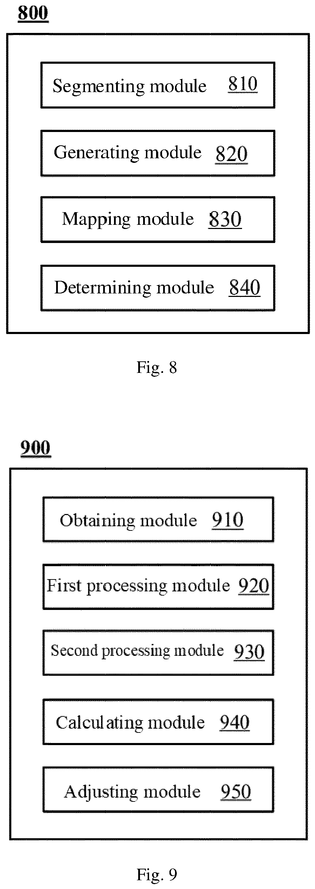

According to an embodiment of the present disclosure, there is further provided an object detection apparatus. FIG. 8 is a structural block diagram of an object detection apparatus 800 according to an embodiment of the present disclosure. As shown in FIG. 8, the apparatus 800 includes:

a segmenting module 810 configured to segment an image to be detected into a plurality of image blocks;
a generating module 820 configured to generate a feature representation of the image to be detected based on the plurality of image blocks;
a mapping module 830 configured to map the feature representation by using a preset parameter set to obtain a plurality of feature maps of the image to be detected; and
a determining module 840 configured to determine a position and a class of a target object in the image to be detected based on the plurality of feature maps.

According to an embodiment of the present disclosure, accurate object detection can be implemented.

According to an embodiment of the present disclosure, there is further provided an apparatus for training an object detection model. The object detection model includes a feature extraction network and a region proposal network. FIG. 9 is a structural block diagram of an apparatus 900 for training an object detection model according to an embodiment of the present disclosure. As shown in FIG. 9, the apparatus 900 includes:

an obtaining module 910 configured to obtain a first sample image and a second sample image, where the first sample image and the second sample image include a target object belonging to a target class, and the first sample image is annotated with a real position and the target class of the target object;

a first processing module 920 configured to input the first sample image and the second sample image to the feature extraction network to obtain a first feature of the first sample image, where the first feature is extracted based on the second sample image;

a second processing module 930 configured to input the first feature to the region proposal network to obtain a predicted position and a predicted class of the target object in the first sample image;

a calculating module 940 configured to calculate a loss value of the object detection model based on the real position, the target class, the predicted position, and the predicted class; and

an adjusting module 950 configured to adjust parameters of the object detection model based on the loss value.

According to this embodiment of the present disclosure, the object detection model is obtained by training the first sample image and the second sample image, and the first sample image and the second sample image include the target object belonging to the target class. In a training process of the object detection model, a feature of the first sample image (i.e., the first feature) is extracted based on the second sample image, so that the second sample image can guide and enhance feature learning of the object detection model about the first sample image, to improve an object detection effect of the object detection model on the first sample image. Although the number of sample images of the target class is small, a trained object detection model can still implement accurate detection on the target object.

It should be understood that each module or unit of the apparatus 800 shown in FIG. 8 may correspond to each step of the method 100 described with reference to FIG. 1, and each module of the apparatus 900 shown in FIG. 9 may correspond to each step of the method 300 described with reference to FIG. 3. Therefore, the operations, features, and advantages described above for the method 100 are equally applicable to the apparatus 800 and the modules and units included therein, and the operations, features and advantages described above for the method 300 are equally applicable to the apparatus 900 and the modules included therein. For the sake of brevity, some operations, features, and advantages are not described herein again.

Although specific functions are discussed above with reference to specific modules, it should be noted that the functions of the various modules discussed herein may be divided into a plurality of modules, and/or at least some functions of a plurality of modules may be combined into a single module. For example, the segmenting module 810 and the generating module 820 described above may be combined into a single module in some embodiments.

It should be further understood that, various technologies may be described herein in the general context of software and hardware elements or program modules. The various modules described above with respect to FIG. 8 and FIG. 9 may be implemented in hardware or in hardware incorporating software and/or firmware. For example, these modules may be implemented as computer program code/instructions configured to be executed in one or more processors and stored in a computer-readable storage medium. Alternatively, these modules may be implemented as hardware logic/circuitry. For example, in some embodiments, one or more of the segmenting module 810, the generating module 820, the mapping module 830, the determining module 840, the obtaining module 910, the first processing module 920, the second processing module 930, the calculating module 940, and the adjusting module 950 may be implemented together in a System on Chip (SoC). The SoC may include an integrated circuit chip (which includes a processor (e.g., a Central Processing Unit (CPU), a microcontroller, a microprocessor, and a Digital Signal Processor (DSP)), a memory, one or more communication interfaces, and/or one or more components in other circuits), and may optionally execute a received program code and/or include an embedded firmware to perform functions.

According to the embodiments of the present disclosure, there are further provided an electronic device, a readable storage medium, and a computer program product.

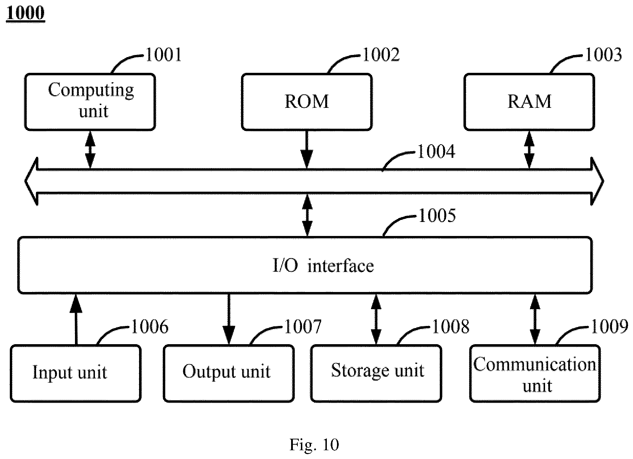

Referring to FIG. 10, a structural block diagram of an electronic device 1000 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 10, the device 1000 includes a computing unit 1001, which may perform various appropriate actions and processing according to a computer program stored in a read-only memory (ROM) 1002 or a computer program loaded from a storage unit 1008 to a random access memory (RAM) 1003. The RAM 1003 may further store various programs and data required for the operation of the device 1000. The computing unit 1001, the ROM 1002, and the RAM 1003 are connected to each other through a bus 1004. An input/output (I/O) interface 1005 is also connected to the bus 1004.

A plurality of components in the device 1000 are connected to the I/O interface 1005, including: an input unit 1006, an output unit 1007, the storage unit 1008, and a communication unit 1009. The input unit 1006 may be any type of device capable of entering information to the device 1000. The input unit 1006 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 1007 may be any type of device capable of presenting information, and may include, but is not limited to, a display, a speaker, a video/audio output terminal, a vibrator, and/or a printer. The storage unit 1008 may include, but is not limited to, a magnetic disk and an optical disc. The communication unit 1009 allows the device 1000 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth™ device, an 802.11 device, a Wi-Fi device, a WiMAX device, a cellular communication device, and/or the like.

The computing unit 1001 may be various general-purpose and/or special-purpose processing components with processing and computing capabilities. Some examples of the computing unit 1001 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 1001 performs the various methods and processing described above, for example, the method 100 or 300. For example, in some embodiments, the method 100 or 300 may be implemented as a computer software program, which is tangibly contained in a machine-readable medium, such as the storage unit 1008. In some embodiments, a part or all of the computer program may be loaded and/or installed onto the device 1000 via the ROM 1002 and/or the communication unit 1009. When the computer program is loaded onto the RAM 1003 and executed by the computing unit 1001, one or more steps of the method 100 or 300 described above can be performed. Alternatively, in other embodiments, the computing unit 1001 may be configured, by any other suitable means (for example, by means of firmware), to perform the method 100 or 300.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present disclosure is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

**Claims**

1. A computer-implemented object detection method, comprising:

    segmenting (110) an image to be detected into a plurality of image blocks;
    generating (120) a feature representation of the image to be detected based on the plurality of image blocks;
    mapping (130) the feature representation by using a preset parameter set to obtain a plurality of feature maps of the image to be detected; and
    determining (140) a position and a class of a target object in the image to be detected based on the plurality of feature maps.

2. The method according to claim 1, wherein the generating a feature representation of the image to be detected based on the plurality of image blocks comprises:

    for each image block of the plurality of image blocks:

        determining a first vector representation of the image block based on pixel values of the image block;
        transforming the first vector representation by using a preset transformation matrix to generate a second vector representation of the image block; and

    combining the second vector representation of each image block of the plurality of image blocks to obtain the feature representation of the image to be detected.

3. The method according to claim 2, wherein the plurality of image blocks are of the same size and do not overlap with each other, and
   wherein the first vector representation of the image block is a concatenation of pixel values of each channel of the image block.

4. The method according to claim 1, further comprising:
   training an object detection model (600), wherein the object detection model comprises a feature extraction network (610) and a region proposal network (620), and wherein the training the object detection model comprises:

Obtaining (310) a first sample image and a second sample image, wherein the first sample image and the second sample image comprise a target object belonging to a target class, and the first sample image is annotated with a real position and the target class of the target object;

inputting (320) the first sample image and the second sample image to the feature extraction network to obtain a first feature of the first sample image, wherein the first feature is extracted based on the second sample image;

inputting (330) the first feature to the region proposal network to obtain a predicted position and a predicted class of the target object in the first sample image;

calculating (340) a loss value of the object detection model based on the real position, the target class, the predicted position, and the predicted class; and

adjusting (350) parameters of the object detection model based on the loss value.

5. The method according to claim 4, wherein the second sample image comprises and only comprises the target object.

6. The method according to claim 4 or 5, wherein the obtaining the first sample image and the second sample image comprises:

obtaining a plurality of sample images of the target class, wherein each sample image comprises at least the target object; and

obtaining a plurality of local images by clipping a local region comprising the target object from each sample image of the plurality of sample images,

wherein the first sample image is any one of the plurality of sample images, and the second sample image is any one of the plurality of local images.

7. The method according to claim 4, wherein the first sample image and the second sample image each are any one of a plurality of sample images of the target class.

8. The method according to any one of claims 4 to 7, before the obtaining the first sample image and the second sample image, further comprising:

pre-training the object detection model based on image data of a basic class, wherein the basic class is different from the target class.

9. The method according to any one of claims 4 to 8, wherein the feature extraction network comprises a first extraction branch for extracting the first feature and a second extraction branch for extracting a second feature of the second sample image, wherein the first extraction branch comprises at least one first attention module, the second extraction branch comprises at least one second attention module, the at least one first attention module and the at least one second attention module are in a one-to-one correspondence, and each first attention module shares parameters with a second attention module corresponding to the first attention module, wherein

each second attention module of the at least one second attention module is configured to: process second input data input to the second attention module, and output a value matrix of the second input data; and

each first attention module of the at least one first attention module is configured to:

obtain a value matrix output by a second attention module corresponding to the first attention module;

process first input data input to the first attention module to obtain a query matrix and a key matrix of the first input data; and

determine and output first output data of the first attention module based on the query matrix, the key matrix, and the value matrix.

10. The method according to claim 9, further comprising:

deleting the second extraction branch in response to determining that the loss value is less than a preset threshold.

11. An object detection apparatus, comprising:

a segmenting module (810) configured to segment an image to be detected into a plurality of image blocks;

a generating module (820) configured to generate a feature representation of the image to be detected based on the plurality of image blocks;

a mapping module (830) configured to map the feature representation by using a preset parameter set to obtain a plurality of feature maps of the image to be detected; and

a determining module (840) configured to determine a position and a class of a target object in the image to be detected based on the plurality of feature maps.

12. A non-transitory computer-readable storage medium storing computer instructions, wherein the computer instructions are configured to enable a computer to implement the method according to any one of claims 1 to 10.

13. A computer program product, comprising a computer program, wherein the computer program, when executed by a processor, implements the method according to any one of claims 1 to 10.

100

| Segment an image to be detected into a plurality of image blocks | 110 |

↓

| Generate a feature representation of the image to be detected based on the plurality of image blocks | 120 |

↓

| Map the feature representation by using a preset parameter set to obtain a plurality of feature maps of the image to be detected | 130 |

↓

| Determine a position and a class of a target object in the image to be detected based on the plurality of feature maps | 140 |

Fig. 1

200

| Segmenting module 210 | → | Generating module 220 | → | Mapping module 230 | → | Determining module 240 |

Image to be detected

Position and class of a target object

Fig. 2

<u>300</u>

```
┌──────────────────────────────────────────────────────────┐  310
│                                                          │
│        Obtain a first sample image and a second sample image │
│                                                          │
└──────────────────────────────────────────────────────────┘
                            │
                            ▼
┌──────────────────────────────────────────────────────────┐  320
│   Input the first sample image and the second sample image to │
│    a feature extraction network to obtain a first feature of the │
│    first sample image, where the first feature is extracted based │
│                 on the second sample image              │
└──────────────────────────────────────────────────────────┘
                            │
                            ▼
┌──────────────────────────────────────────────────────────┐  330
│      Input the first feature to a region proposal network to │
│      obtain a predicted position and a predicted class of a │
│             target object in the first sample image     │
└──────────────────────────────────────────────────────────┘
                            │
                            ▼
┌──────────────────────────────────────────────────────────┐  340
│    Calculate a loss value of an object detection model based │
│     on a real position, a target class, the predicted position, │
│                   and the predicted class               │
└──────────────────────────────────────────────────────────┘
                            │
                            ▼
┌──────────────────────────────────────────────────────────┐  350
│        Adjust parameters of the object detection model   │
│                   based on the loss value               │
└──────────────────────────────────────────────────────────┘
```

Fig. 3

410

416

414

418

412

420

422

424

Fig. 4A

430

434

432

440

442

Fig. 4B

Fig. 5

600 First feature
of the first
sample
image

Second sample image → Feature extraction network 610 → Region proposal network 620 → Predicted position and predicted class of a target object in the first sample image

First sample image →

Fig. 6

610B

Transformer module 616B

Second sample image → Downsampling module 611B → Normalization module (LN) 612B → $X_2$ → Second attention module (W-MSA/SW-MSA) 613B → ⊕ → Normalization module (LN) 614B → Multi-layer perceptron module (MLP) 615B → ⊕ → Second feature

$V_2$

610A

Transformer module 616A

First sample image → Downsampling module 611A → Normalization module (LN) 612A → $X_1$ → First attention module (W-MSA/SW-MSA) 613A → $O_1$ → ⊕ → Normalization module (LN) 614A → Multi-layer perceptron module (MLP) 615A → ⊕ → First feature

Fig. 7

**800**

Segmenting module    810

Generating module    820

Mapping module    830

Determining module    840

Fig. 8

**900**

Obtaining module    910

First processing module    920

Second processing module    930

Calculating module    940

Adjusting module    950

Fig. 9

**1000**

Fig. 10